# EUROPEAN PATENT APPLICATION

(11) **EP 3 393 035 A1**
(43) Date of publication of application: **24.10.2018**
(21) Application number: 17799451.4
(22) Date of filing: 17.05.2017
(51) Int. Cl.: H02P 5/46, F24F 11/02

(54) **CONTROL DEVICE AND AIR CONDITIONER**

(30) Priority: 20.05.2016 JP 2016101278
(71) Applicant: Mitsubishi Heavy Industries Thermal Systems, Ltd., Tokyo 108-8215 (JP)
(72) Inventor: OONO, Kenzo, Tokyo 108-8215 (JP); SUMIYA, Atsuyuki, Tokyo 108-8215 (JP)
(74) Representative: Cabinet Beau de Loménie
(86) International application number: PCT/JP2017/018596
(87) International publication number: WO 2017/200027

(57) **Abstract**

The objective of the present invention is to reduce costs relating to a CPU and to reduce the surface area occupied by a circuit board. This control device is provided with: rectifier circuits (12, 21) which convert a three-phase alternating-current voltage from an alternating-current power supply (11) into a direct current voltage; an inverter (13); smoothing capacitors (14, 24); an inverter power supply circuit (22a) which generates a power supply voltage for the inverter (13) from the direct current voltage output from the rectifier circuit (21); a CPU (23) equipped with a compressor motor (M1) control function and an auxiliary equipment control function; a CPU power supply circuit (22b) which generates a power supply voltage for the CPU (23) from the direct current voltage output from the rectifier circuit (21); a first diode (26) which is provided in a positive electrode wire (C(+)) connecting a direct current positive electrode bus bar (A(+)) and a direct current positive electrode bus bar (B(+)); and a second diode (27) provided in a negative electrode wire (C(-)) connecting a direct current negative electrode bus bar (A(-)) and a direct current negative electrode bus bar (B(-)).

## Description

### Technical Field

The present invention relates to an air conditioner, and particularly, to a control device that controls a compressor motor and auxiliary equipment.

### Background Art

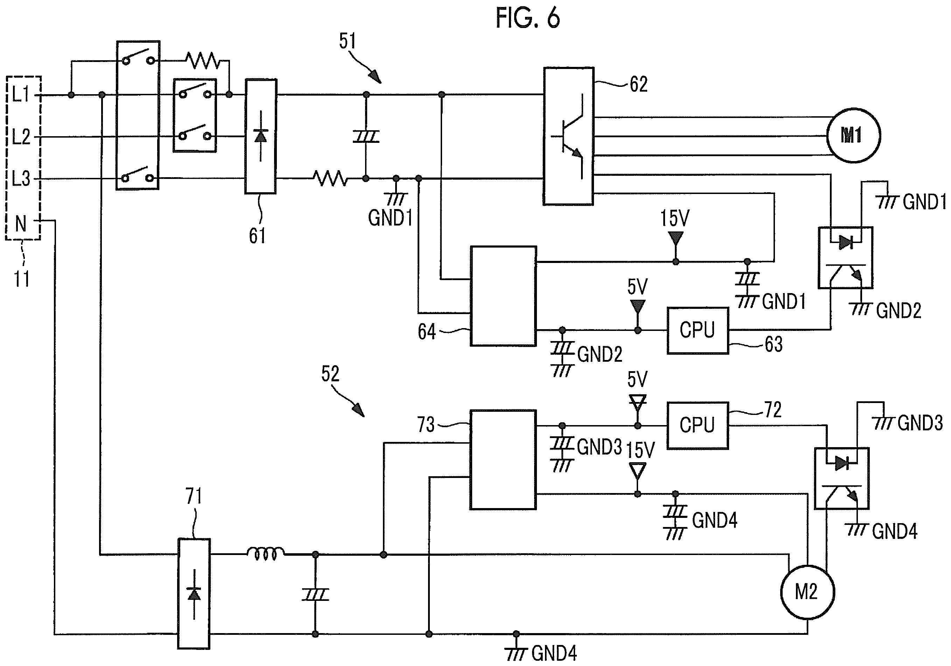

A circuit illustrated in Fig. 6 has been suggested as a control device of an air conditioner using a three-phase four-wire type alternating-current power supply in which a neutral point is grounded. The control device illustrated in Fig. 6 includes a main circuit 51 that drives a compressor motor M1, and an auxiliary equipment circuit 52 that drives a fan motor M2.

The main circuit 51 includes a rectifier circuit 61 that rectifies a three-phase alternating-current voltage, an inverter 62 that converts a direct current voltage output from the rectifier circuit 61 into an alternating-current voltage and supplies the converted alternating-current voltage to the compressor motor M1, and a CPU 63 for controlling the inverter 62. An insulated type inverter switching power supply circuit 64 is connected to an output line between the rectifier circuit 61 and the inverter 62. The inverter switching power supply circuit 64 generates a power supply voltage for the inverter 62 from the direct current voltage output from the rectifier circuit 61 to supply the generated power supply voltage to the inverter 62, generates a power supply voltage suitable for the CPU 63, and outputs the generated power supply voltage to the CPU 63.

The auxiliary equipment circuit 52 includes a rectifier circuit 71 that is connected to one phase L1 among three phases and a neutral point N and converts an alternating-current voltage into a direct current voltage to supply the converted direct current voltage to the fan motor M2, and a CPU 72 for controlling the fan motor M2. An insulated type fan motor switching power supply circuit 73 is connected to an output line of the rectifier circuit 71. The fan motor switching power supply circuit 73 generates a power supply voltage for the fan motor M2 from the direct current voltage output from the rectifier circuit 71 to supply the generated power supply voltage to the fan motor M2, generates a power supply voltage suitable for the CPU 72, and outputs the generated power supply voltage to the CPU 72.

### Citation List

### Patent Literature

[PTL 1] Japanese Unexamined Patent Application Publication No. 6-319293

### Summary of Invention

### Technical Problem

In the control device illustrated in Fig. 6, the CPU 63 for the inverter control and the CPU 72 for the fan motor control are provided. For this reason, there are problems that costs are high and the surface area occupied by a circuit board also increases.

The invention has been made in view of such circumstances, and an object thereof is to provide a control device and an air conditioner capable of reducing costs relating to a CPU and the surface area occupied by a circuit board.

### Solution to Problem

A first aspect of the invention is a control device that is connected to a three-phase four-wire type alternating-current power supply and controls a compressor motor and auxiliary equipment of an air conditioner. The control device includes a first rectifier circuit that converts a three-phase alternating-current voltage from the alternating-current power supply into a direct current voltage; an inverter that converts the direct current voltage output from the first rectifier circuit into an alternating-current voltage and outputs the converted alternating-current voltage to the compressor motor; a first smoothing capacitor that is connected to an output side of the first rectifier circuit; a second rectifier circuit that converts the three-phase alternating-current voltage into a direct current voltage; an inverter power supply circuit that generates a power supply voltage for the inverter from the direct current voltage output from the second rectifier circuit; a CPU equipped with a compressor motor control function and an auxiliary equipment control function; a CPU power supply circuit that generates a power supply voltage for the CPU from the direct current voltage output from the second rectifier circuit; a second smoothing capacitor connected to an output side of the second rectifier circuit; a positive electrode wire that connects a first positive electrode bus bar between the first rectifier circuit and the inverter and a second positive electrode bus bar between the second rectifier circuit and the CPU power supply circuit to each other; a first diode provided in the positive electrode wire; a negative electrode wire that connects a first negative electrode bus bar between the first rectifier circuit and the inverter and a second negative electrode bus bar between the second rectifier circuit and the CPU power supply circuit to each other; and a second diode provided in the negative electrode wire. The first diode is connected in a direction in which an electric current flows from the first positive electrode bus bar to the second positive electrode bus bar. The second diode is connected such that an electric current flows from the second negative electrode bus bar to the first negative electrode bus bar.

According to the above aspect, since the inverter control and the auxiliary equipment control are realized by the shared CPU, it is possible to reduce costs. The first positive electrode bus bar and the second positive electrode bus bar are connected to each other by the positive electrode wire and the first negative electrode bus bar and the second negative electrode bus bar are connected to each other by the negative electrode wire. Thus, in a case where the power supply from the alternating-current power supply is cut off during driving of the inverter or the like, it is possible to rapidly discharge electric charges stored in the first smoothing capacitor and the second smoothing capacitor with the inverter power supply circuit or the CPU power supply circuit. Moreover, since both end voltages of the second smoothing capacitor continue being supplied to the CPU power supply circuit until the electric charges of the first smoothing capacitor and the second smoothing capacitor are completely discharged, the CPU power supply voltage can be maintained. Accordingly, even in a case where the alternating-current power supply is suddenly cut off due to an unexpected phenomenon, it is possible to execute operation end processing by the CPU.

In the above control device, the inverter power supply circuit and the CPU power supply circuit may be integrated with each other.

By doing in this way, it is possible to reduce the number of parts.

The above control device may further include an auxiliary equipment power supply circuit that generates a power supply voltage for the auxiliary equipment from the direct current voltage output from the second rectifier circuit. The auxiliary equipment power supply circuit may be integrated with the inverter power supply circuit and the CPU power supply circuit.

Regarding the auxiliary equipment power supply circuit provided as a separate member, it is also possible to integrate the inverter power supply circuit and the CPU power supply circuit with each other to further reduce the number of parts.

A second aspect of the invention is a control device that is connected to a three-phase four-wire type alternating-current power supply and controls a compressor motor and auxiliary equipment of an air conditioner. The control device includes a rectifier circuit that is connected to any one phase of three phases and a neutral point in the alternating-current power supply and converts an alternating-current voltage into a direct current voltage; a smoothing capacitor connected to an output side of the rectifier circuit; an auxiliary equipment power supply circuit that generates a power supply voltage for the auxiliary equipment from the direct current voltage output from the rectifier circuit; a CPU equipped with a compressor motor control function and an auxiliary equipment control function; and a CPU power supply circuit that generates a power supply voltage for the CPU from the direct current voltage output from the rectifier circuit.

According to the above aspect, since the inverter control and the auxiliary equipment control are realized by the shared CPU, it is possible to reduce costs. The auxiliary equipment power supply circuit is provided on the output side of the rectifier circuit. Thus, in a case where the power supply from the alternating-current power supply is cut off during the driving of the auxiliary equipment, it is possible to rapidly discharge the electric charges stored in the smoothing capacitors with the auxiliary equipment power supply circuit or the auxiliary equipment. Moreover, both the end voltages of the smoothing capacitor continues being supplied to the auxiliary equipment power supply circuit until the electric charges of the smoothing capacitors are completely discharged. Thus, the power supply voltage for the CPU can be maintained. Accordingly, even in a case where the alternating-current power supply is suddenly cut off due to an unexpected phenomenon, it is possible to execute operation end processing by the CPU.

In the above control device, the auxiliary equipment power supply circuit and the CPU power supply circuit may be integrated with each other.

By doing in this way, it is possible to reduce the number of parts.

A third aspect of the invention is an air conditioner including the above control device. Advantageous Effects of Invention

According to the invention, the effects capable of reducing costs relating to the CPU and the surface area occupied by a circuit board are exhibited.

### Brief Description of Drawings

Fig. 1 is a view illustrating a schematic configuration of an air conditioner related to a first embodiment of the invention.
Fig. 2 is a view illustrating a schematic configuration of a control device related to the first embodiment of the invention.
Fig. 3 is a view illustrating an example of a control sequence of switches related to the first embodiment of the invention.
Fig. 4 is a view illustrating a schematic configuration of a control device related to a second embodiment of the invention.
Fig. 5 is a view illustrating a schematic configuration of a control device related to a third embodiment of the invention.
Fig. 6 is a view illustrating a schematic configuration of a related-art control device.

### Description of Embodiments

### [First Embodiment]

Hereinafter, a control device related to a first embodiment of the invention and an air conditioner including the control device will be described with reference to the drawings.

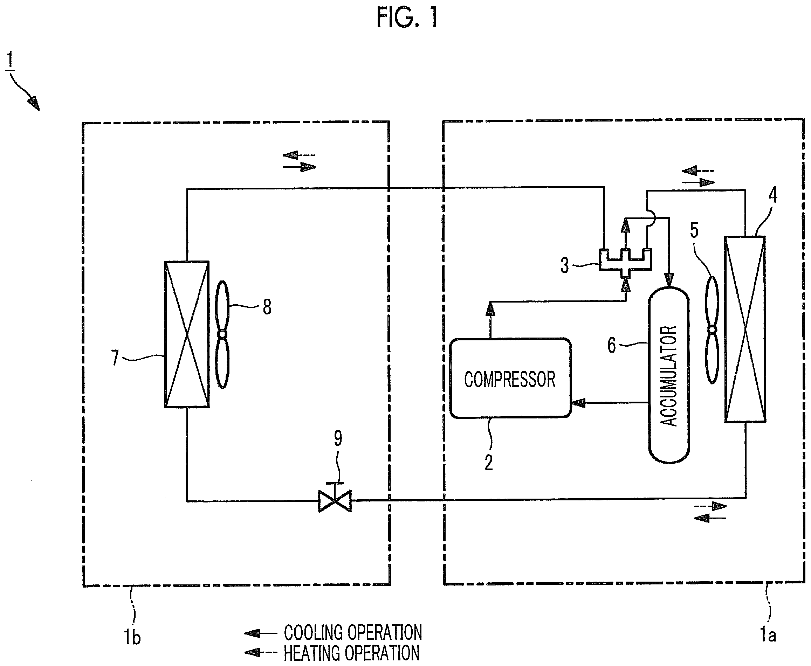

Fig. 1 is a view illustrating a schematic configuration of the air conditioner related to the present embodiment. As illustrated in Fig. 1, the air conditioner 1 includes an outdoor unit 1a, and an indoor unit 1b connected to outdoor unit 1a by a common refrigerant pipe. Although a configuration in which one indoor unit 1b is connected to one outdoor unit 1a is illustrated for convenience in Fig. 1, the number of outdoor units 1a to be installed and the number of indoor units 1b to be connected are not limited.

The outdoor unit 1a includes, for example, a compressor 2 that compresses and delivers a refrigerant, a four-way valve 3 that switches a circulation direction of the refrigerant, an outdoor heat exchanger 4 that performs heat exchange between the refrigerant and ambient air, an outdoor fan 5, an accumulator 6 that is provided on a suction-side pipe of the compressor 2 for the purpose of gas-liquid separation or the like of the refrigerant, and the like. The indoor unit 1b includes an indoor heat exchanger 7, an indoor fan 8, an electronic expansion valve 9, and the like.

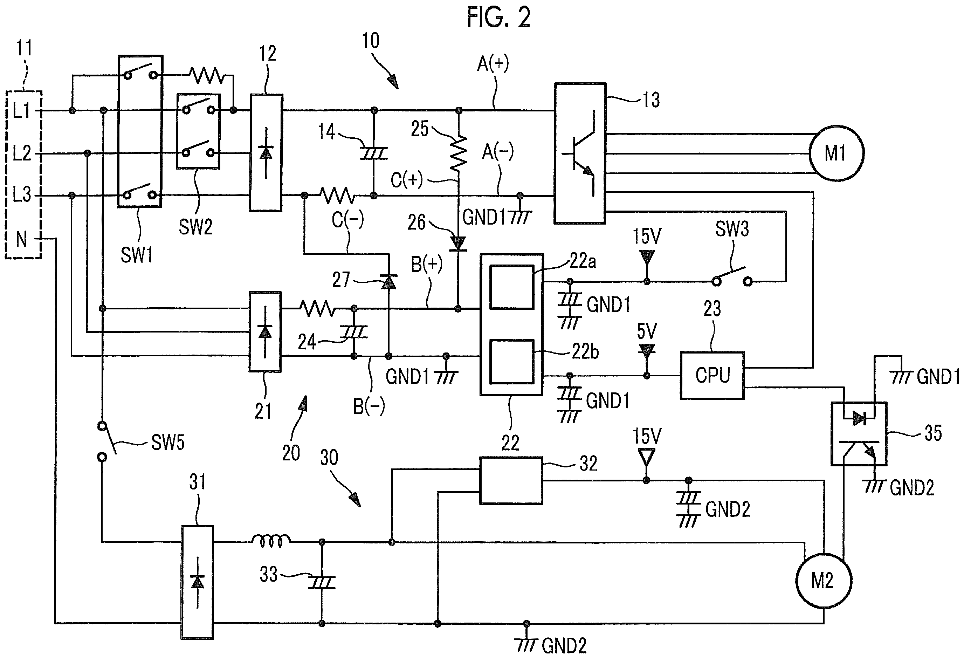

Fig. 2 is a view illustrating a schematic circuit configuration of the control device related to the present embodiment. The control device is, for example, a control device that controls a compressor motor M1 of the compressor 2 and a fan motor M2 of the outdoor fan 5 that are include in the outdoor unit 1a of the air conditioner 1, and is configured to receive power supply from a three-phase four-wire type alternating-current power supply 11.

The control device includes a main circuit 10, a control circuit 20, and an auxiliary equipment circuit 30 as main components. The main circuit 10 includes, as main components, a rectifier circuit (first rectifier circuit) 12 that converts a three-phase alternating-current voltage of the alternating-current power supply 11 into a direct current voltage, an inverter 13 that converts the direct current voltage output from the rectifier circuit 12 into an alternating-current voltage to supply the alternating-current voltage to the compressor motor M1, and a smoothing capacitor 14 that is connected to an output line of the rectifier circuit 12 in parallel to the inverter 13. Specifically, the smoothing capacitor 14 is connected between a direct-current positive electrode bus bar (first positive electrode bus bar) A(+) and a direct-current negative electrode bus bar (first negative electrode bus bar) A(-).

The control circuit 20 includes, as main components, a rectifier circuit (second rectifier circuit) 21 that converts the three-phase alternating-current voltage of the alternating-current power supply 11 into a direct current voltage, an inverter switching power supply circuit 22 that generates a power supply voltage from the direct current voltage output from the rectifier circuit 21, a CPU 23, and a smoothing capacitor 24 that is connected to an output line of the rectifier circuit 21 in parallel to the inverter switching power supply circuit 22. Specifically, the smoothing capacitor 24 is connected between a direct-current positive electrode bus bar (second positive electrode bus bar) B(+) and a direct-current negative electrode bus bar (second negative electrode bus bar) B(-) .

The inverter switching power supply circuit 22 includes an inverter power supply circuit 22a for generating a power supply voltage (for example, 15 V) for the inverter 13, and a CPU power supply circuit 22b for generating a power supply voltage (for example, 5 V) for the CPU 23. The inverter switching power supply circuit 22 is of a non-insulated type or an insulated type. It is also possible to use a regulator, a voltage-dividing resistor, or the like instead of the inverter switching power supply circuit 22.

In the present embodiment, the inverter switching power supply circuit 22 in which the inverter power supply circuit 22a and the CPU power supply circuit 22b are integrated with each other is adopted. However, the inverter power supply circuit 22a and the CPU power supply circuit 22b may be individually provided as separate types. In this way, the control device may include a configuration in which the power supply voltage for the inverter 13 and the power supply voltage for the CPU 23 are generated from the direct current voltage output from the rectifier circuit 21, and the specific configuration thereof is not limited. The output of the inverter power supply circuit 22a is supplied to the inverter 13, and the output of the CPU power supply circuit 22b is supplied to the CPU 23. The CPU 23 loads a control program for the compressor motor M1, a control program for the fan motor M2, a switch ON/OFF control program, and the like.

The direct-current positive electrode bus bar A(+) and the direct-current positive electrode bus bar B(+) are connected to each other by a positive electrode wire C(+). A resistor 25 and a first diode 26 are connected in series to the positive electrode wire C(+). Similarly, the direct-current negative electrode bus bar A(-) and the direct-current negative electrode bus bar B(-) is connected to each other by a negative electrode wire C(-). A second diode 27 is connected to the negative electrode wire C(-). The first diode 26 is connected in a direction in which an electric current flows from the direct-current positive electrode bus bar A(+) to the direct-current positive electrode bus bar B(+), and the second diode 27 is connected such that an electric current flows from the direct-current negative electrode bus bar B(-) to the direct-current negative electrode bus bar A(-).

Moreover, a ground GND1 of the control circuit 20 is shared with the ground GND1 of the main circuit 10.

The auxiliary equipment circuit 30 includes a rectifier circuit 31 that is connected to any one phase L1 among the three phases and a neutral point N in the alternating-current power supply 11, converts an alternating-current voltage into a direct current voltage, and output the alternating-current voltage to the fan motor M2, and an auxiliary equipment switching power supply circuit 32 that generates a power supply voltage for the fan motor M2 from the direct current voltage output from the rectifier circuit 31.

The auxiliary equipment switching power supply circuit 32 is of a non-insulated type or an insulated type. It is also possible to use a regulator or the like instead of the auxiliary equipment switching power supply circuit 32.

As a ground GND2 of the auxiliary equipment circuit 30, a ground different from that of the main circuit 10 and the control circuit 20 is used. The reason why the different grounds are used is because the main circuit 10 and the like have the three-phase alternating-current voltage as an input voltage, whereas the auxiliary equipment circuit 30 has an alternating-current voltage from an L1 phase and the neutral point N as an input voltage.

In the main circuit 10, an inrush-current suppressing relay SW1 and a stationary state relay SW2 are provided between alternating-current power supply 11 and the rectifier circuit 12. A relay SW3 is provided in a power supply line that connects the inverter power supply circuit 22a of the inverter switching power supply circuit 22 and the inverter 13 to each other. A relay SW5 is provided in the power supply line to that connects the one phase L1 of the alternating-current power supply 11 and the rectifier circuit 31 to each other.

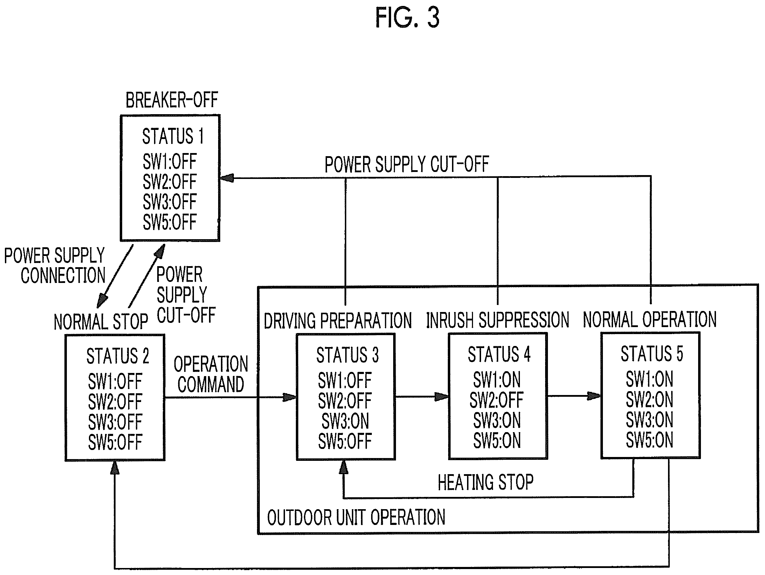

Next, a control sequence of the control device related to the present embodiment will be described with reference to Fig. 3. Opening/closing control of the above individual relay SW1 to SW3 and SW5 is realized as the CPU 23 executes the switch ON/OFF control program.

### (State 1)

At the time of breaker-off, all the relays SW1 to SW3 and SW5 is brought into OFF states (open states).

### (Status 2)

If the breaker-off is changed to breaker-on, the three-phase alternating-current voltage is converted into the direct current voltage by the rectifier circuit 21. The output of the inverter power supply circuit 22a is supplied In the inverter switching power supply circuit 22, the power supply voltage for the inverter 13 is generated by the inverter power supply circuit 22a, and the power supply voltage for the CPU 23 is generated by the CPU power supply circuit 22b. Accordingly, the power supply voltage is supplied to the CPU 23 and is brought into a standby state. Since the relay SW3 is in an OFF state at this time, the power supply voltage is not input to the inverter 13.

### (State 3)

If an operation command for the air conditioner is input by operating a remote controller or the like, the relay SW3 is brought into an ON state (closed state), and thereby the inverter power supply voltage is supplied to the inverter 13, and the inverter 13 is also brought into the standby state.

### (State 4)

Subsequently, the relay SW1 and the relay SW5 are brought into ON states. Accordingly, in the main circuit 10, the three-phase alternating-current voltage is converted into the direct current voltage by the rectifier circuit 12, and the converted direct current voltage is supplied to the inverter 13. As the CPU 23 executes the an inverter control program and an auxiliary equipment control program, an inverter control signal and an auxiliary equipment control signal are generated. The inverter control signal is supplied to the inverter 13. Accordingly, the switching operation of the inverter 13 based on the inverter control signal is started, and the direct current voltage is converted into the three-phase alternating-current voltage and is supplied to the compressor motor M1. On the other hand, in the auxiliary equipment circuit 30, by bringing the relay SW5 into the ON state, the alternating-current voltage is supplied to the rectifier circuit 31, and the direct current voltage is supplied from the rectifier circuit 31 to the fan motor M2 and the auxiliary equipment switching power supply circuit 32. In the auxiliary equipment switching power supply circuit 32, the power supply voltage for the fan motor M2 is generated from the direct current voltage and is supplied to the fan motor M2. The auxiliary equipment control signal generated in the CPU 23 is input to the fan motor M2 via a photo-coupler 35. Accordingly, control of the fan motor M2 based on the auxiliary equipment control signal is performed.

### (State 5)

Next, if charging of the smoothing capacitor 14 is completed when a predetermined time (for example, several seconds) lapses after the relay SW1 is brought into the ON state and both end voltages of the smoothing capacitor 14 is stabilized at a constant value, the relay SW2 is brought into an ON state.

In the above states 2 to 5, if the supply of power from the alternating-current power supply is cut off, the power supply from the alternating-current power supply 11 to the main circuit 10, the control circuit 20, and the auxiliary equipment circuit 30 is cut off. In this case, since the direct-current positive electrode bus bar A(+) of the main circuit 10 and the direct-current positive electrode bus bar B(+) of the control circuit 20 are connected to each other by the positive electrode wire C(+), and the direct-current negative electrode bus bar A(-) and the direct-current negative electrode bus bar B(-) are connected to each other the by negative electrode wire C(-), the electric potential of the direct-current positive electrode bus bar B(+) and the electric potential of the direct-current positive electrode bus bar A(+) can be made to coincide with each other, the electric charges stored in the smoothing capacitors 14 and 24 can be made to be consumed by the resistor 25 and the inverter switching power supply circuit 22. Accordingly, it is possible to rapidly discharge the electric charges of the smoothing capacitors 14 and 24. Moreover, both the end voltages of the smoothing capacitor 24 continues being supplied to the inverter switching power supply circuit 22 until the electric charges of the smoothing capacitors 14 and 24 are completely discharged. Hence, the power supply voltages of the CPU 23 can be somewhat maintained even after the power supply is disconnected, and the relays SW1 to SW33, and SW 5 can be controlled to be in the OFF states.

In the auxiliary equipment circuit 30, since the electric charge stored in the smoothing capacitor 33 stored electricity is consumed by the auxiliary equipment switching power supply circuit 32 and the fan motor M2, it is possible to rapidly discharge the electric charge of the smoothing capacitor 33.

As described above, according to the control device related to the present embodiment and the air conditioner equipped with the control device, the inverter control and the auxiliary equipment control can be realized by the common CPU 23. Accordingly, it is possible to reduce costs. Moreover, the direct-current positive electrode bus bar A(+) and the direct-current positive electrode bus bar B(+) are connected to each other by the positive electrode wire C(+) and the direct-current negative electrode bus bar A(-) and the direct-current negative electrode bus bar B(-) are connected to each other by the negative electrode wire C(-). Thus, in a case where the power supply from the alternating-current power supply 11 is cut off, it is possible to rapidly discharge the electric charges stored in the smoothing capacitors 14 and 24 with the resistor 25 and the inverter switching power supply circuit 22. Moreover, both the end voltages of the smoothing capacitor 24 continues being supplied to the inverter switching power supply circuit 22 until the electric charges of the smoothing capacitors 14 and 24 are completely discharged. Thus, the power supply voltage for the CPU 23 can be maintained. Accordingly, the CPU 23 can bring the relays SW1 to SW3 and SW5 into the OFF states in accordance with the control sequence at the time of power supply cutoff.

In the breaker-off state, in a case where the outdoor fan 5 (refer to Fig. 1) idles under the influence of a strong wind or the like, a counter electromotive force may be generated and the smoothing capacitor 33 of the auxiliary equipment circuit 30 may be charged. However, also in this case, the electric charges are consumed by the fan motor M2 and the auxiliary equipment switching power supply circuit 32. Thus, a state where the electric charge is stored in the smoothing capacitor 33 can be avoided over a long time.

### [Second Embodiment]

Hereinafter, a control device related to a second embodiment of the invention and an air conditioner including the control device will be described with reference to the drawings. However, in the present embodiment, the same parts as those of the first embodiment will be designated by the same reference signs and the description thereof will be omitted, and differences will mainly be described.

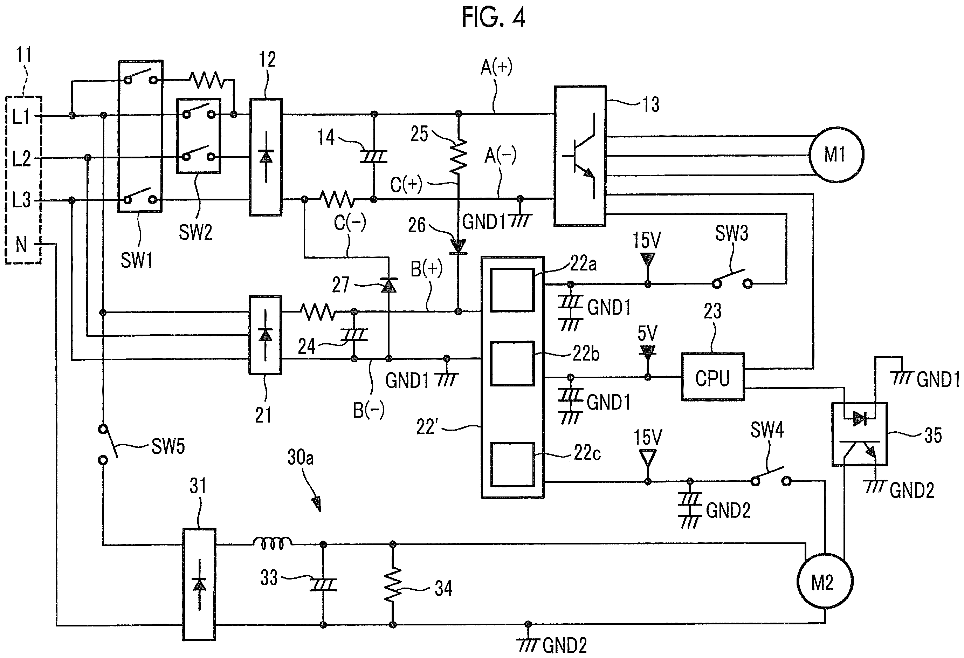

Fig. 4 is a view illustrating a schematic circuit configuration of the control device related to the second embodiment of the invention. The control device related to the present embodiment is different from the control device related to the first embodiment in that an auxiliary equipment switching power supply circuit is integrated with an inverter switching power supply circuit. That is, an inverter switching power supply circuit 22' includes the inverter power supply circuit 22a, the CPU power supply circuit 22b, and an auxiliary equipment power supply circuit 22c. A relay SW4 is provided in an output line that connects the auxiliary equipment power supply circuit 22c and the fan motor M2 to each other. The ground GND2 of the auxiliary equipment power supply circuit 22c is shared with a ground GND2 of an auxiliary equipment circuit 30a. Regarding the auxiliary equipment circuit 30a, a resistor 34 is connected in parallel to the smoothing capacitor 33. The resistor 34 is a discharge resistor provided in order to discharging the electric charge of the smoothing capacitor 33.

According to the control device related to the present embodiment, a three-phase alternating-current voltage is converted into a direct current voltage by the rectifier circuit 21, and the converted direct current voltage is output to the inverter switching power supply circuit 22'. In the auxiliary equipment power supply circuit 22c of the inverter switching power supply circuit 22', a power supply voltage for the fan motor M2 is generated from this DC power supply. The power supply voltage for the fan motor M2 is supplied to the fan motor M2 when the relay SW4 is in an ON state. The relay SW4 is controlled by the CPU 23. Specifically, the CPU 23 brings the relay SW4 into the ON state only within a period for which the fan motor M2 is driven. Accordingly, The power supply in the period for which the fan motor M2 is not driving can be cut off, and it is possible to reduce power consumption.

In the auxiliary equipment circuit 30a, the resistor 34 is connected in parallel to the smoothing capacitor 33, it is possible to rapidly discharge the electric charge stored in the smoothing capacitor 33 at the time of power supply cutoff and counter electromotive force generation.

### [Third Embodiment]

Hereinafter, a control device related to a third embodiment of the invention and an air conditioner including the control device will be described with reference to the drawings. However, in the present embodiment, the same parts as those of the first embodiment will be designated by the same reference signs and the description thereof will be omitted, and differences will mainly be described.

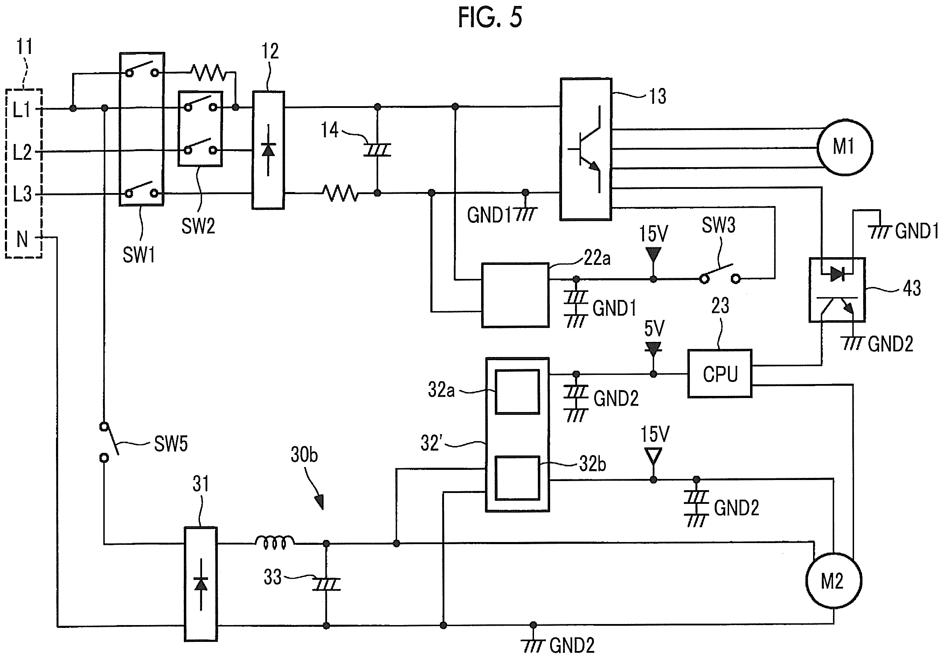

Fig. 5 is a view illustrating a schematic circuit configuration of the control device related to the third embodiment of the invention. The control device related to the present embodiment is different from the control device related to the first embodiment in that the CPU power supply circuit is integrated with the auxiliary equipment switching power supply circuit and in that the inverter switching power supply circuit is connected to the direct-current positive electrode bus bar A(+) and the direct-current negative electrode bus bar A(-).

As illustrated in Fig. 5, an auxiliary equipment switching power supply circuit 32' includes a CPU power supply circuit 32a, and an auxiliary equipment switching power supply circuit 32b. Accordingly, the alternating-current voltage from any one phase L1 and the neutral point N is converted into the direct current voltage by the rectifier circuit 31, and the power supply voltage for the CPU 23 and the power supply voltage for the fan motor M2 are generated from this direct current voltage in the auxiliary equipment switching power supply circuit 32'. The power supply voltage for the CPU 23 is supplied to the CPU 23, and the power supply voltage for the fan motor M2 is supplied to the fan motor M2.

The ground GND2 of the CPU 23 is shared with the ground GND2 of an auxiliary equipment circuit 30b. Hence, an inverter control signal output from the CPU 23 is output to the inverter 13 via a photo-coupler 43. Meanwhile, since the CPU 23 and the fan motor M2 have the shared ground GND2, a control signal of the fan motor M2 is input as it is without passing through the photo-coupler.

According to the control device related to the present embodiment, the rectifier circuit 21 and the smoothing capacitor 24 can be omitted from the control devices related to the first and second embodiments. Accordingly, further reduction in the number of parts and further reduction in the surface area occupied by a circuit board can be achieved.

### Reference Signs List

1: air conditioner
2: compressor
5: outdoor fan
10: main circuit
11: alternating-current power supply
12, 31: rectifier circuit
13: inverter
14, 24, 33: smoothing capacitor
20: control circuit
21: rectifier circuit
22, 22': inverter switching power supply circuit
22a: inverter power supply circuit
22b, 32a: CPU power supply circuit
22c, 32b: auxiliary equipment power supply circuit
23: CPU
26 first diode
27: second diode
30, 30a, 30b: auxiliary equipment circuit
32, 32': auxiliary equipment switching power supply circuit
A(+), B(+): direct-current positive electrode bus bar
A(-), B(-): direct-current negative electrode bus bar
C(+): positive electrode wire
C(-): negative electrode wire
M1: compressor motor
M2: fan motor
N: neutral point
SW1 to SW5: relay

## Claims

1. A control device that is connected to a three-phase four-wire type alternating-current power supply and controls a compressor motor and auxiliary equipment of an air conditioner, the control device comprising:
a first rectifier circuit that converts a three-phase alternating-current voltage from the alternating-current power supply into a direct current voltage;
an inverter that converts the direct current voltage output from the first rectifier circuit into an alternating-current voltage and outputs the converted alternating-current voltage to the compressor motor;
a first smoothing capacitor that is connected to an output side of the first rectifier circuit;
a second rectifier circuit that converts the three-phase alternating-current voltage into a direct current voltage;
an inverter power supply circuit that generates a power supply voltage for the inverter from the direct current voltage output from the second rectifier circuit;
a CPU equipped with a compressor motor control function and an auxiliary equipment control function;
a CPU power supply circuit that generates a power supply voltage for the CPU from the direct current voltage output from the second rectifier circuit;
a second smoothing capacitor connected to an output side of the second rectifier circuit;
a positive electrode wire that connects a first positive electrode bus bar between the first rectifier circuit and the inverter and a second positive electrode bus bar between the second rectifier circuit and the CPU power supply circuit to each other;
a first diode provided in the positive electrode wire;
a negative electrode wire that connects a first negative electrode bus bar between the first rectifier circuit and the inverter and a second negative electrode bus bar between the second rectifier circuit and the CPU power supply circuit to each other; and
a second diode provided in the negative electrode wire,
wherein the first diode is connected in a direction in which an electric current flows from the first positive electrode bus bar to the second positive electrode bus bar, and
wherein the second diode is connected such that an electric current flows from the second negative electrode bus bar to the first negative electrode bus bar.

2. The control device according to Claim 1,
wherein the inverter power supply circuit and the CPU power supply circuit are integrated with each other.

3. The control device according to Claim 1 or 2, further comprising:
an auxiliary equipment power supply circuit that generates a power supply voltage for the auxiliary equipment from the direct current voltage output from the second rectifier circuit,
wherein the auxiliary equipment power supply circuit is integrated with the inverter power supply circuit and the CPU power supply circuit.

4. A control device that is connected to a three-phase four-wire type alternating-current power supply and controls a compressor motor and auxiliary equipment of an air conditioner, the control device comprising:
a rectifier circuit that is connected to any one phase of three phases and a neutral point in the alternating-current power supply and converts an alternating-current voltage into a direct current voltage;
a smoothing capacitor connected to an output side of the rectifier circuit;
an auxiliary equipment power supply circuit that generates a power supply voltage for the auxiliary equipment from the direct current voltage output from the rectifier circuit;
a CPU equipped with a compressor motor control function and an auxiliary equipment control function; and
a CPU power supply circuit that generates a power supply voltage for the CPU from the direct current voltage output from the rectifier circuit.

5. The control device according to Claim 4,
wherein the auxiliary equipment power supply circuit and the CPU power supply circuit are integrated with each other.

6. An air conditioner comprising:
the control device according to any one of Claims 1 to 5.
